# EUROPEAN PATENT SPECIFICATION

(11) **EP 4 488 786 B1**
(45) Date of publication and mention of the grant of the patent: **02.12.2026**
(21) Application number: 23183961.4
(22) Date of filing: 06.07.2023
(51) Int. Cl.: G05D 1/00, G05D 1/606

(54) **PREDICTING EXTERNAL ENVIRONMENTAL DISTURBANCES ON A VESSEL TRAVELLING IN A BODY OF WATER**
VORHERSAGE EXTERNER UMWELTSTÖRUNGEN AUF EINEM IN EINEM GEWÄSSER FAHRENDEN SCHIFF
PRÉDICTION DE PERTURBATIONS EXTÉRIEURES ENVIRONNEMENTALES SUR UN NAVIRE SE DÉPLAÇANT DANS UNE MASSE D'EAU

(43) Date of publication of application: 08.01.2025
(73) Proprietor: ABB SCHWEIZ AG, 5400 Baden (CH)
(72) Inventor: LINDER, Jonas, 464 93 Mellerud (SE); TERVO, Kalevi, 00980 Helsinki (FI)
(74) Representative: Kransell & Wennborg KB

(56) References cited:
- CN-A- 111 026 135
- US-A1- 2014 067 249

## Description

### TECHNICAL FIELD

The invention relates to a method of predicting external environmental disturbances on a first vessel travelling in a body of water, a prediction handling device for handling predictions of external environmental disturbances on the first vessel travelling as well as a vessel comprising such a prediction handling device.

### BACKGROUND

Forces generated by external environmental disturbances have a huge impact on modern vessels due to their large size. Understanding the behaviour of a vessel under influence of external environmental disturbances is difficult and requires a great deal of experience by the crew of the vessel. Certain regions or routes might have particularly challenging conditions that are rapidly changing due to e.g. other vessels, human built structures or natural obstructions. For example, tall islands in archipelagos, buildings in harbours or bays in fjords blocking wind. Other examples are waves or other hydrodynamic disturbances by other ships and bank effects.

In situations with tight fairways or heavy traffic, it is important to not wander away from a planned path. Reacting to and compensating for disturbances after they impact the vessel's motion potentially requires more energy and might introduce unwanted wear and tear of the vessel's actuators. In manual control, experienced captains will manoeuvre the vessel to compensate for the disturbances, for instance, by positioning the vessel towards the wind direction or by positioning the vessel away from an island in the direction of the wind to increase the safety margin if there would be an engine failure. In closed loop control, such as autopilots or dynamic positioning, disturbance feedforward from onboard sensors is used to mitigate the impact of the disturbances before they have an impact.

EP 2878528 describes a vessel with onboard sensors for sensing weather data, such as wind data, in order to predict a disturbance on a vessel trajectory. Also, a nautical map is used to determine the environment of the vessel. CN 111 026 135 A is also a relevant piece of prior art.

When planning a vessel trajectory, a model of the vessel may be used. However, it is difficult to separate the effect of different disturbances from model errors of the vessel model. Moreover, rapid changes of disturbances are difficult to predict by only using information from onboard sensors since the disturbance is not measurable before it is also impacting the motion of the vessel.

There is therefore a need for improvement in the field.

### SUMMARY

One object of the invention is therefore to allow the handling of a vessel to be improved when there are changes in external environmental disturbances on the vessel as it travels in a body of water. The invention is defined by the appended claims.

One exemplifying first aspect is directed towards a method of predicting external environmental disturbances on a first vessel travelling in a body of water, the method being performed by a prediction handling device and comprising:
obtaining at least one present sensor measurement of the environment of the first vessel at a present vessel position,
obtaining at least one present disturbance measurement of a first type of external environmental disturbance on the first vessel at the present vessel position, and
obtaining a prediction of the external environmental disturbance of the first type on the first vessel at one or more estimated future positions of the first vessel, the prediction having been made by a predictor using the present disturbance measurement of the first type and the present sensor measurement in a vessel environment model that is based on previous sensor measurements of the environment and previous disturbance measurements of the first type.

One exemplifying second aspect is directed towards a prediction handling device for handling predictions of external environmental disturbances on a first vessel travelling in a body of water, the prediction handling device comprising a processor operative to:
obtain at least one present sensor measurement of the environment of the first vessel at a present vessel position,
obtain at least one present disturbance measurement of a first type of external environmental disturbance on the first vessel at the present vessel position, and
obtain a prediction of the external environmental disturbance of the first type on the first vessel at one or more estimated future positions of the first vessel, the prediction having been made by a predictor using the present disturbance measurement of the first type and the present sensor measurement in a vessel environment model that is based on previous sensor measurements of the environment and previous disturbance measurements of the first type.

One exemplifying third aspect is directed towards a vessel comprising a first sensor operable to sense the first type of external environmental disturbance, at least one second sensor operable to sense the environment of the vessel and the prediction handling device according to the second aspect.

The second sensor comprises a radar, a lidar and/or a camera. There is also a vessel control function used to control the first vessel.

The vessel may further comprise a vessel control device operative to provide the vessel control function, which vessel control function is configured to receive and operate on the predicted external environmental disturbance of the first type.

An external environmental disturbance of a vessel is a disturbance coming from outside of the vessel and being caused by the environment around the vessel, such as by the air and/or water around the vessel.

The obtaining of a prediction may comprise predicting the external environmental disturbance of the first type on the first vessel.

Alternatively, the obtaining of a prediction may comprise sending the present disturbance measurement of the first type and the present sensor measurement of the environment to a server in a request for a prediction and receiving the prediction as a response.

The previous sensor measurements of the environment and previous disturbance measurements of the first type may be linked to previous vessel positions of vessels on which they are collected.

The present disturbance measurement of a first type of external environmental disturbance may be collected on a present trip of the first vessel in the body of water. The previous disturbance measurements of the first type may be measurements made in the same and/or another body of water.

At least some of the previous disturbance measurements of the first type may have been collected on previous trips in the same body of water. It is also possible that one or more of the previous disturbance measurements have been collected on previous trips in one or more other bodies of water. In some instances, previous disturbance measurements are also collected during the present trip.

The present sensor measurement of the environment may also be collected on the present trip of the first vessel in the body of water. The previous sensor measurements of the first type may be measurements made in the same and/or another body of water.

At least some of the previous sensor measurements of the environment may have been collected on previous trips in the same body of water. It is also possible that one or more of the previous sensor measurements of the environment have been collected on previous trips in one or more other bodies of water. In some instances, previous sensor measurements of the environment are also collected during the present trip.

Also the present vessel position and optionally also a present heading of the first vessel may be obtained during the present trip, while the previous vessel positions and optionally also previous headings may have been collected on previous trips in the body of water. Some of them may also be obtained during the present trip.

The sensor measurements may comprise radar and/or lidar echoes and/or camera images.

The vessel environment model may additionally have been formed based on analysing previous sensor measurements of the environment and identifying at least one object and a position of the object in relation to a previous vessel position.

In this case the prediction may be based on whether a similar object can be found in the present sensor measurement of the environment and the position of the similar object in relation to the present vessel position

The vessel environment model may also have been formed based on a chart of the body of water and possibly of the environment of the body of water.

In this case it is possible that the current vessel position and a heading of the vessel is mapped to a position in the chart.

A detected stationary object may also be mapped to a stationary object in the chart.

The vessel environment model comprises obstacles affecting the first type of external environmental disturbance. It is possible that one or more of the identified stationary objects are such obstacles. An obstacle may be an element in a chart or an identified object having a significant height relative to the height of the first vessel. The vessel height may in this case also consider the draught. The obstacles may be considered in the vessel environment model.

The present sensor measurement may be analysed and the present vessel position may be determined based on the analysis of the present sensor measurement. It is for instance possible to determine the relative position and heading of the first vessel in relation to objects identified in the present sensor measurement.

Furthermore, the one or more future positions may be estimated based on the analysis of the present sensor measurement of the environment and possible preceding sensor measurements of the environment made by the first vessel.

The obtaining of the present vessel position and heading of the first vessel may comprise analysing the present and a preceding sensor measurement of the first vessel and estimating the heading and position based on these present and preceding sensor measurements.

The present vessel position may additionally be obtained from a position sensor, such as an GPS (global positioning system). Alternatively, the present heading and position of the first vessel may be obtained through being received from the vessel control function.

The previous vessel positions, the previous sensor measurements of the environment and the previous disturbance measurements of the first type may have been used to train the predictor in the way that the first type of disturbance changes as a vessel moves through a body of water.

Also the previous sensor measurements of the environment may be used to train the predictor. They may also be used to update the vessel environment model.

The previous vessel positions in the body of water may comprise previous positions of the first vessel and/or previous positions of one or more other vessels. Thereby the previous trips may comprise previous trips of the first vessel and/or previous trips of one or more other vessels.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing a prediction handling device,
fig. 2 shows a computer program product in the form of a CD ROM with computer program code used to implement the prediction handling device,
fig. 3 schematically shows a first vessel comprising the prediction handling device,
fig. 4 schematically shows a chart with the first vessel travelling along a route and where external environmental disturbances of the first vessel are predicted,
fig. 5 shows a flow chart of a number of method steps in a first embodiment of a method of predicting external environmental disturbances, and
fig. 6 shows a flow chart of a number of method steps in a second embodiment of the method of predicting external environmental disturbances.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

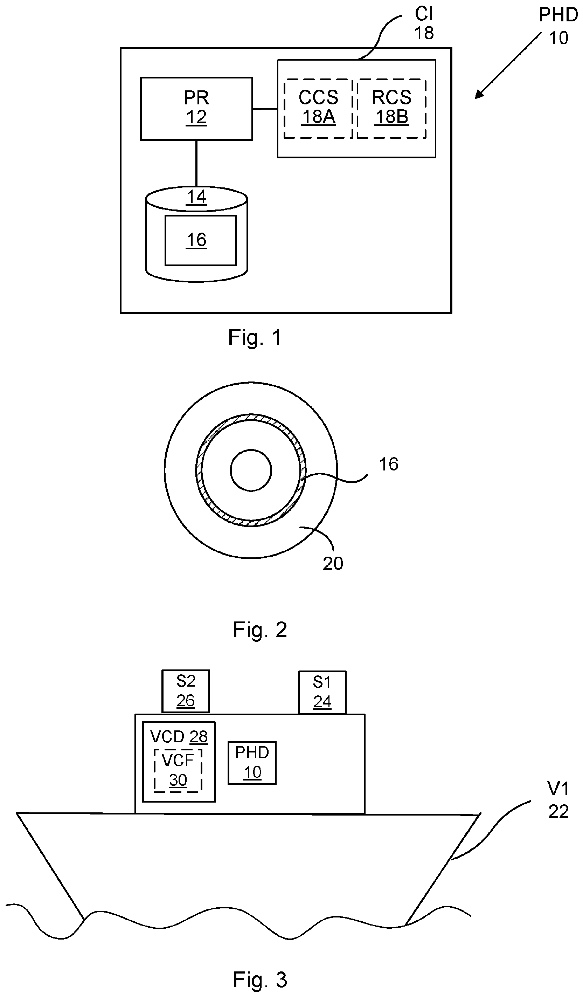

Fig. 1 schematically shows one realization of a prediction handling device PHD 10. In the present example, the prediction handling device 10 comprises a processor PR 12 and a data storage 14 with computer program instructions 16 that, when executed by the processor 12, implements a prediction handling function. There is also a communication interface CI 18. The communication interface 18 may have a computer communication section CCS 18A and/or a radio communication section RCS 18B, where the computer communication section 18A may be an Ethernet interface for connection to a local area network (LAN) for instance a LAN provided in the vessel and the radio communication section 18B may comprise a transceiver for transmission and reception of radio signals. It should be realized that it is possible that the communication interface 18 only comprises the radio communication section 18B and not the computer communication section 18A or vice versa.

The prediction handling device 10 may thus comprise a processor 12 with associated program memory 14 including computer program code 16 for implementing the prediction handling function.

A computer program may also be provided via a computer program product, for instance in the form of a computer readable storage medium or data carrier, like a CD ROM or a memory stick, carrying such a computer program with the computer program code, which will implement the prediction handling function when being loaded into a processor. One such computer program product in the form of a CD ROM 20 with the above-mentioned computer program code 16 is schematically shown in fig. 2.

The prediction handling device 10 may with advantage be provided in a vessel.

Fig. 3 schematically shows a first vessel V1 22 comprising the prediction handling device PHD 10. As can be seen in the figure the first vessel 22 also comprises a first sensor S1 24, a second sensor S2 26 as well as a vessel control device VCD 28 that implements a vessel control function VCF 30. The previously described communication interface may here be used for communicating with the vessel control device 28 and the first sensor 24. For this reason, these may all be connected to a LAN. The communication interface may also communicate with a server comprising a database with historical vessel data and/or providing a predictor.

The first sensor 24 may be a sensor for sensing a first type of external environmental disturbance on the first vessel. The first type of external environmental disturbance may as an example be wind and therefore the sensor may be a wind sensor that senses the speed and/or direction of the wind. The second sensor 26 may be a sensor for sensing the environment of the first vessel 22 and may comprise a radar, a lidar and/or a camera. The vessel control function 30 may receive and operate on the predicted external environmental disturbance of the first type.

Aspects of the present disclosure are directed towards predicting external environmental disturbances on the first vessel as it travels in the body of water. The aspects are thus concerned with predicting disturbances coming from outside the vessel and being caused by the environment around the vessel.

Understanding the behaviour of a vessel under the influence of external environmental disturbances is difficult and requires an experienced crew. Certain regions might have particularly challenging and rapidly changing conditions. Reacting to disturbances after they have an impact on the vessel potentially requires more energy and might introduce wear of the actuators. Today, experienced captains will manoeuvre the vessel to compensate for the disturbances and in closed loop control, feedforward from onboard sensors may be used to mitigate the disturbance before it has an impact. However, rapid changes are difficult to predict by only using onboard sensors that directly measure the disturbances.

Aspects of the present disclosure are directed towards building up a position dependent disturbance prediction using a vessel environment model that is based on data from the first sensor 24 and data from the second sensor 26. In that way, rapid changes can be predicted and used for control, route planning or in advisory systems for the crew of the first vessel 22. Thereby it may be possible to decrease energy consumption as well as to increase operational performance of less experienced crews.

One aspect of the present disclosure is concerned with predicting a first type of external environmental disturbance on the first vessel 10 as it travels in the body of water.

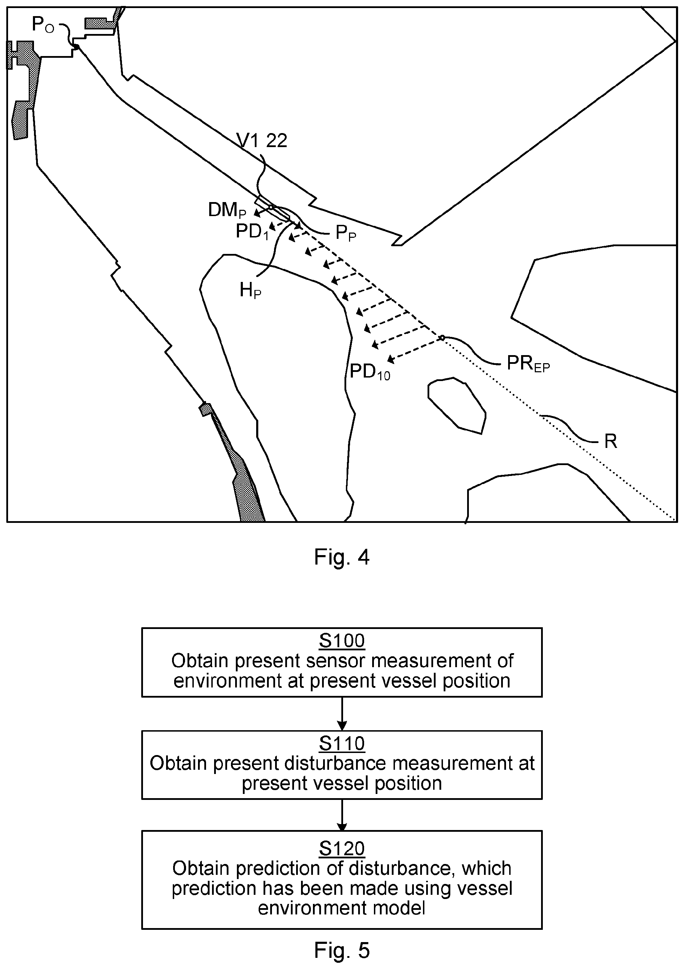

How this can be done will now be described with further reference to fig. 4 and 5, where fig 4 shows an exemplary chart in which the first vessel 22 travels in a present trip along a route R from a point of origin P_{O} to a destination point and fig. 5 shows a flow chart of a number of method steps in a method of predicting external environmental disturbances on the first vessel and being performed by the prediction handling function of the prediction handling device.

In the example given below, the first type of external environmental disturbance is wind, which wind may have a speed and direction. However, it should be realized that in addition or instead also other types of external environmental disturbances can be handled in a similar way. One example of a second type of external environmental disturbance is current.

As can be seen in fig. 4, the first vessel 22 is travelling along a route R in the present trip. In this present trip, the first vessel 22 starts at the point of origin P_{O} of the route R and then continues towards a point of destination (not shown) of the route R. The point of origin P_{O} may with advantage be a point in a first harbour and the point of destination may be a point in a second harbour. In the example in fig. 4, the first vessel 22, after leaving the first harbour, passes through a strait between an island and a part of the mainland before it enters more open waters. Both the island and the mainland may have obstacles, such as buildings and high rocks that block the wind.

Furthermore, the first vessel 22 may additionally have travelled in the body of water several times before. The first vessel 22 may thus have travelled in the body of water more than one time earlier in one or more previous trips. This can be the case when the first vessel 22 is a ferry or perhaps a cruise ship. During these previous trips, the prediction handling device 10 may have collected disturbance measurements of the first type of external environment disturbance, for instance using the first sensor 24, where these previous disturbance measurements of the first type may have been collected at various positions in the body of water. At the same time as the measurements were collected also previous sensor measurements of the environment may have been obtained. Also previous positions and possible headings of the first vessel 22 may have been obtained on these previous trips in the body of water. The positions and headings may have been sensed using a position sensor, for instance in the form of a GPS (global positioning system), determined based on sensor measurements from the second sensor 26, or received from the vessel control function 30 of the vessel control device 28. A previous heading of the first vessel may have been predicted based on the position at the time measurements were collected and one or more preceding positions during the trip. In the case of using sensor measurements from the second sensor 26, the position and optionally also the heading may have been obtained based on analysing the environment sensed by the second sensor 26. For instance, they may be predicted based on the sensor measurements at the time of collection and preceding sensor measurements. This may involve analysing the present and a preceding sensor measurement of the first vessel 22 and estimating the position and optionally also the heading based on these present and preceding sensor measurements,

After each such trip, the prediction handling device 10 stores the collected measurements, with advantage together with the positions and optional vessel headings in a database as historical data. The database may be provided on the first vessel 22, such as in the memory of the prediction handling device 10 or in an onboard server. Alternatively, the database may be provided in an external server, such as a server on the mainland or in the cloud. The historic data may thereafter be accessed by a predictor, for instance a predictor in the prediction handling device via the communication interface 18, in order to make predictions.

There may additionally exist a vessel environment model. This model may be a general model that is applicable for any body of water. It may additionally be a model that links sensor measurements of the environment and disturbance measurements of the first type to a vessel. The model may thus be based on sensor measurements of the environment and disturbance measurements of the first type.

Additionally or instead, the model may consider the body of water through which the first vessel is traveling during the present trip and the surroundings of this body of water. For instance, the model may be formed based on a chart, such as a navigational chart of the body of water. It is additionally or instead possible that the sensor measurements of the environment have been analysed and one or more objects and the positions of these objects in and/or around the body of water have been identified. It is for instance possible to identify stationary objects such as the island in fig. 4 and any buildings surrounding the strait in relation to previous vessel positions. This data can also be used in the vessel environment model.

The vessel environment model may thus be formed based on analysing the previous sensor measurements of the environment and identifying at least one object. The vessel environment model may additionally comprise obstacles affecting the first type of external environmental disturbance. It is possible that one or more of the identified objects are such obstacles. In this case also detected stationary objects or obstacles may be mapped to stationary objects in the chart. An obstacle may be an element in a chart or a stationary identified object having a significant height relative to the height of the first vessel 22. For instance, it may be an object with a height that exceeds the height of the first vessel 22. The vessel height may in this case also consider the draught.

The predictor may thus have or have access to a history of sensor measurements of vessel environments and disturbance measurements of the first type experienced in at least one body of water, where these measurements may optionally be associated with corresponding positions, vessel headings and possibly also with the points in time when they were obtained. The predictor may also have or have access to the vessel environment model.

Over time, sufficiently much data may have been collected for obtaining a prediction of the first type of disturbance, which prediction may involve obtaining a prediction of the first type of disturbance using the vessel environment model given the present sensor measurement of the environment and the present disturbance of the first type at the present vessel position.

In one variation the prediction is obtained through the prediction handling function of the prediction handling device 10 implementing the predictor that performs the prediction. Alternatively, the prediction handling device may request a prediction from a predictor implemented on a server, for instance a server in the cloud, which predictor accesses the historic data, makes a prediction and returns the prediction to the prediction handling device 10 as a response.

As an example, the first vessel 22 travels along the route R during a present trip. During the present trip, the prediction handling device 10 may additionally continually obtain sensor measurements of the environment and disturbance measurements of the first type of external environmental disturbance at various positions along the route R. It may also obtain the positions and possibly also data about the headings at these positions.

In the example given above, the prediction handling device 10 obtains at least one present sensor measurement of the environment of the first vessel 22 at a present vessel position P_{P}, and at a present point in time, S100. The sensor measurement may with advantage be obtained from the second sensor 26. The prediction handling device 10 also obtains at least one present disturbance measurement DM_{P} of the first type of external environmental disturbance on the first vessel 22, where the disturbance is also obtained at the present vessel position P_{P} and the present point in time, S110. The disturbance measurement may with advantage be obtained from the first sensor 24. Thereby the disturbance measurement may be a present first disturbance measurement of the first type of external environmental disturbance made on the first vessel 22. In the example of fig. 4, the present vessel position P_{P} is a position when the first vessel 22 enters the previously mentioned strait.

The prediction handling device 10 may analyse the present sensor measurement and determine the present vessel position P_{P} and possibly also a heading H_{P} based on this analysis. It may also estimate one or more future positions based on the analysis of the present sensor measurement of the environment and possible previous sensor measurements of the environment made by the first vessel 22. Alternatively, the present vessel position may be received, for instance from a position sensor, and the one or more future positions may be estimated based on the present and previous positions or the present vessel position and a present vessel heading, which vessel heading may also be received together with the present vessel position.

Thereafter the prediction handling device 10 obtains make predictions PD₁ - PD₁₀ of the first type of external environmental disturbance on the first vessel 22 at the one or more estimated future positions of the first vessel 22 during the present trip along route R, S120, where the predictions have been made by the predictor using the present disturbance measurement of the first type and the present sensor measurement of the environment in the previously-described vessel environment model, where the vessel environment model is based on previous sensor measurements of the environment and previous disturbance measurements of the first type. The prediction may additionally have been performed in a prediction range.

The prediction may be obtained through the prediction handling device 10 implementing the predictor and thereby also making the predictions. However, the prediction may also be performed on some other entity, such as a server in the cloud. and in this case the prediction handling device 10 may send the present sensor measurement and the present disturbance measurement DM_{P} to a predictor implemented by the server possibly together with the present vessel position P_{P}, and present heading H_{P}. The predictor then in turn returns the prediction to the prediction handling device 10, where the prediction has been made using the present sensor measurement of the environment and present disturbance information comprising the present disturbance measurement in the vessel environment model. Optionally also the present vessel position and present heading is used. Alternatively, the predictor might return the vessel environment model or the parameters of the vessel environment model that is used to predict the disturbances locally.

The starting point of the prediction range may be the present vessel position P_{P} and the end point of the prediction range PR_{EP} may be provided a number of discrete vessel positions from the present vessel position P_{P}. The end of the prediction range PR_{EP} may be provided a fixed number of such positions from the present vessel position and these positions may additionally be provided at equal distances from each other along the route R. Alternatively, the end point of the prediction range PR_{EP} may be the end position of the route R.

In the example shown in fig. 4, the prediction range comprises ten discrete equidistant predictions along the route R, starting with a first predicted disturbance PD₁ at a first predicted position after the present vessel position at a first predicted point in time and ending with a tenth predicted disturbance PD₁₀ at a tenth predicted position after the present vessel position at a tenth predicted point in time, which tenth prediction PD₁₀ is in this example also the last prediction of the prediction range.

The prediction may be performed using a number of prediction techniques. The prediction technique used can for instance be based on gaussian processes, deep neural networks, fitting of polynomials, lookup tables based on the recorded data or building a virtual 3D environment, etc.

When at least one object and a position of the object in relation to a previous vessel position is identified in the vessel environment model, the prediction may be based on whether a present object can be found in the present sensor measurement of the environment when the present object is similar to a previously identified object. Furthermore, the prediction may also be based on if a relationship between the present vessel position P_{P} and the present object is similar to a relationship between the previously identified object and the position of the vessel that detected it. The similarity may be that the distances are similar. If for instance the first vessel 22 is deemed to be close to or moving towards an island in the same or similar way as one or more vessels from which one or more previous sensor measurements have been made, then it is possible that a disturbance similar to disturbances experienced during previous passages past previously identified islands is predicted for the first vessel 22 when deemed to pass the present identified island.

It is additionally possible that previously obtained sensor measurements and previously detected disturbances of the first type on the first vessel during the present passage along the route R have been used in the prediction. In some instances previous disturbances of the first type and previous sensor measurements are thus collected during the present passage along the route R and used in the prediction.

The previous sensor measurements of the environment, the previous disturbance measurements of the first type and possibly also the previous vessel positions may thus be used to train the predictor in the way that the first type of disturbance changes as a vessel moves through a vessel environment, such as a body of water. They may also be used to update the vessel environment model.

In the example of fig. 4, it is thus possible that the predictions in the prediction range PD₁ - PD₁₀ are also based on disturbances of the first type and sensor measurements measured between the point of origin P_{O} and the present vessel position P_{P}.

Through the prediction, it is possible to take pre-emptive action when there are abrupt changes in the first type of external environmental disturbance. This can be exemplified by fig. 4.

In fig. 4, the wind and the prediction of the wind are shown as vectors, where the measured wind is shown as a solid vector and the predictions are shown as dashed vectors. The direction of the vector is the wind direction and the magnitude of the vector corresponds to the wind speed.

In the example of fig. 4, it can be seen that it is possible to predict the wind strength and direction that influences the first vessel 22 during the passage through the strait as well as when it exits the strait and enters more open water. For instance, given the wind speed and direction at the present vessel position P_{P} along the island, the wind speed and direction can be predicted once the first vessel 22 clears the island. In this way, rapid changes of the disturbance can be predicted, and appropriate and early action can be taken before the disturbance impacts the motion of the vessel.

The predictor can be considered to be a position dependent disturbance predictor that can predict how the disturbances change along a future path based on the perception of the environment and disturbance measurements of the disturbance at the present vessel position.

The predictions provide information on the disturbance in the body of water. For instance, given a simulation of the vessel position along the route R, the disturbance information can be returned for a horizon of the trajectory of the vessel. Alternatively, the predicted environmental disturbance is simply displayed along the route in a graphical user interface (GUI) to help advise the crew on changes in the disturbance. The predictions could also be provided to the vessel control function 30, for instance together with disturbance feedforward of the present disturbance measurement DM_{P}. Thereby the control of the first vessel 10 can be improved.

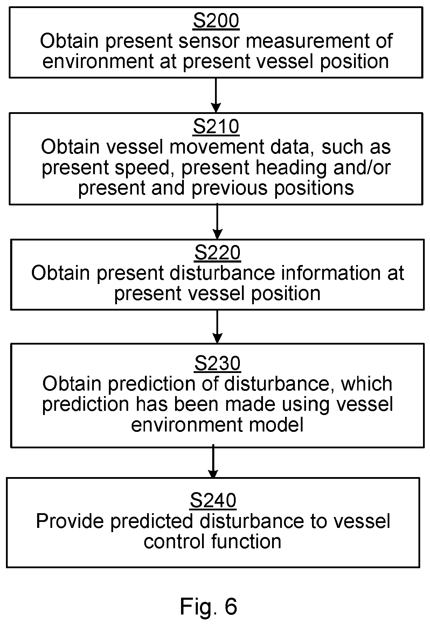

A second embodiment will now be described with reference also being made to fig. 6, which shows a number of method steps in the method of predicting external environmental disturbances on the first vessel 22 and being performed by the prediction handling device 10.

As the first vessel 22 travels along the route R during the present trip, it may continually obtain sensor measurements of the environment and measurements of disturbance information at various positions along the route R, where the disturbance information may comprise the first type of disturbance. It may also obtain vessel movement data, such as speed, positions and headings of the first vessel 22 at these positions. It may additionally obtain sensor measurements of the environment from the second sensor 26.

More particularly, the prediction handling device 10 obtains, from the second sensor 26, at least one present sensor measurement of the environment of the first vessel 22 at a present vessel position P_{P} and a present point in time, S200. These sensor measurements may comprise radar and/or lidar echoes and/or camera images. The prediction handling device 10 also obtains vessel movement data, such as present speed, present heading and/or present and previous vessel positions of the first vessel, S210, which may be done through receiving the vessel movement data from the vessel control function. It also obtains present disturbance information from the first sensor 24 comprising at least one present disturbance measurement DM_{P} of the first type of external environmental disturbance on the first vessel 22, S220. Also here, the disturbance measurement is obtained at a present point in time and at a present vessel position P_{P} along the route R.

After having obtained this data at the present vessel position P_{P}, the prediction handling device 10 obtains a prediction of the disturbance on the first vessel 22 during the present trip, S230, which prediction has been made by the predictor using the present disturbance measurement of the first type and the present sensor measurement in the vessel environment model, where the model again is based on previous sensor measurements of the environment and previous disturbance measurements of the first type. The model may also consider charts as well as identified objects in the sensor measurements of the environment.

The different measurements and vessel data may have been collected on previous trips in the same and/or other bodies of water. Some of these previous measurements and vessel data may also be collected during the present trip.

As before, the prediction may be obtained through the prediction handling device 10 implementing the predictor and performing the prediction or through receiving the prediction from a predictor on another entity, such as a cloud server, where the present sensor measurements the present disturbance information and the vessel movement data are sent to the predictor on the server in a request for a prediction and the prediction is returned as a response to the request.

It is again possible that the prediction has been performed in a prediction range using present disturbance information obtained at the present vessel position P_{P}. The prediction range may be provided in the same way as in the first embodiment.

The predictor may in this case predict how the disturbance is changing when the first vessel moves through the body of water and where also the effects of the environment on the disturbance are considered.

Since it is difficult to separate the effect of different disturbances as well as model errors of a vessel environment model, it is preferable to fit a model to the output of the sensor measuring the environmental disturbance. For instance, it is better to predict the wind direction and speed rather than the force on the first vessel 22. This also increases modularity. Moreover, the predictor is kept as simple as possible which decreases the amount of data (information) needed to fit a model and it should also decrease the computational load to use the model.

Once predictions have been made, they may then be used in existing algorithms for simulation, control or planning.

In the second embodiment, the prediction is used in the control of the first vessel 22.

Therefore, the prediction handling device 10 provides the predicted disturbances of the prediction interval to the vessel control function 30 of the vessel control device 28, S240, where the vessel control function 30 is used to control the first vessel 22 along the route R.

It is also here possible that the predictions are provided together with the actual disturbance measurements made at the present point in time. Thereby the vessel control function 30 of the vessel control device 28 receives and operates on the predicted external environmental disturbances of the first type. It may also receive and operate on the measurements of the disturbances of the first type at the present point in time. This operation may involve the vessel control function 30 changing the control of the first vessel 22 based on the measured and predicted disturbance, where the change of control may involve a change of heading and/or speed of the first vessel 22.

According to aspects of the present disclosure, it is possible to extended prediction to use data from several vessels to accelerate the learning of the predictor, as well as to share the vessel environment models among vessels.

It is thus possible that the historic trips used in the model have been made by more than one other vessel, such as by a second vessel and/or a third vessel. In fact, it is possible that all the historic trips are made by other vessels than the first.

Put differently, the earlier mentioned previous trips through the body of water may comprise previous trips of the first vessel and/or previous trips of one or more other vessel.

Above, the prediction was based on disturbance information comprising the first type of external environmental disturbance. The disturbance information may additionally comprise further types of external environmental disturbance, such as a second type of external environmental disturbance. The first type of external environmental disturbance may as an example be wind, while the second type of external environmental disturbance may be current. The predicting of external environmental disturbances may comprise predicting external environmental disturbances of the first type as well of all the additional types that are used, such as the second type.

For both the first and second embodiments, it is possible to use the present disturbance measurement together with the prediction of the disturbance at the present time to improve future predictions.

The invention may be varied in a number of ways. Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for predicting external environmental disturbances on a first vessel (22) travelling in a body of water, the first vessel comprising a first sensor (24) operable to sense a first type of external environmental disturbance and at least one second sensor (26) comprising a radar, lidar and/or camera and operable to sense the environment of the vessel (22), the method being performed by a prediction handling device (10) and comprising:
obtaining (S100; S200) at least one present sensor measurement of the environment of the first vessel (22) at a present vessel position (P_{P}) from the second sensor (26),
obtaining (S110; S220) at least one present disturbance measurement (DM_{P}) of the first type of external environmental disturbance on the first vessel (22) at the present vessel position (P_{P}) from the first sensor (24), which first type of external environmental disturbance is wind,
obtaining (S120; S230) a prediction of the external environmental disturbance (PD₁ - PD₁₀) of the first type on the first vessel (22) at one or more estimated future positions of the first vessel (22), **characterised in that** said prediction having been made by a predictor using the present disturbance measurement of the first type and the present sensor measurement in a vessel environment model that is based on previous sensor measurements of the environment and previous disturbance measurements of the first type, wherein the environment of the first vessel (22) in and/or around the body of water comprises obstacles affecting the first type of external environmental disturbance, which obstacles are considered in the vessel environment model, and
providing (S240) the predicted external environmental disturbance to a vessel control function (30) used to control the first vessel (22).

2. The method according to claim 1, wherein the vessel environment model has been formed based on a chart of said body of water and possibly of the environment surrounding said body of water with the current vessel position and a heading of the vessel being mapped to a position in the chart.

3. The method according to any previous claim, wherein the previous sensor measurements of the environment and the previous disturbance measurements of the first type are measurements made in the same and/or another body of water.

4. The method as claimed in any previous claim, wherein the previous sensor measurements of the environment and previous disturbance measurements of the first type are linked to previous vessel positions of the first and/or other vessels.

5. The method as claimed in claim 4, wherein the vessel environment model has been formed based on analysing previous sensor measurements of the environment and identifying at least one object and a position of the object in relation to a previous vessel position in the vessel environment model and where the prediction is based on whether a similar object can be found in the present sensor measurement of the environment and on the position of the similar object in relation to the present vessel position.

6. The method according to claim 4 or 5, wherein the previous vessel positions, the previous sensor measurements of the environment and the previous disturbance measurements of the first type have been used to train the predictor in the way that the first type of disturbance changes in the vessel environment model as a vessel moves through a body of water.

7. The method as claimed in any of claims 4 - 6, wherein the previous vessel positions comprise previous positions of the first vessel (22) and/or previous positions of one or more other vessels in the same and/or another body of water.

8. The method according to any of claims 4 - 7, wherein the present vessel position of the first vessel is obtained (S210) together with previous vessel positions of the first vessel through being received from a position sensor or a vessel control function (30) used to control the first vessel (22) and the estimation of one or more future positions is based on an analysis of the present vessel position of the first vessel possibly together with previous vessel positions.

9. The method according to any of claims 1 - 7, further comprising analysing the present sensor measurement, determining the present vessel position based on the analysis of the present sensor measurement of the environment and estimating the one or more future positions based on the analysis of the present sensor measurement of the environment and possible previous sensor measurements of the environment made by the first vessel.

10. A prediction handling device (10) for handling predictions of external environmental disturbances on a first vessel (22) travelling in a body of water, the first vessel comprising a first sensor (24) operable to sense a first type of external environmental disturbance and at least one second sensor (26) comprising a radar, lidar and/or camera and operable to sense the environment of the vessel (22), the prediction handling device (10) comprising
a processor (12) operative to:
obtain at least one present sensor measurement of the environment of the first vessel (22) at a present vessel position (P_{P}) from the second sensor (26),
obtain at least one present disturbance measurement (DM_{P}) of the first type of external environmental disturbance on the first vessel (22) at the present vessel position (P_{P}) from the first sensor (24), which first type of external environmental disturbance is wind,
obtain a prediction of the external environmental disturbance of the first type (PD₁ -PD₁₀) on the first vessel (22) at one or more estimated future positions of the first vessel (22), **characterised in that** said prediction having been made by a predictor using the present disturbance measurement of the first type and the present sensor measurement in a vessel environment model that is based on previous sensor measurements of the environment and previous disturbance measurements of the first type, wherein the environment of the first vessel (22) in and/or around the body of water comprises obstacles affecting the first type of external environmental disturbance, which obstacles are considered in the vessel environment model, and provide the predicted external environmental disturbance to a vessel control function (30) used to control the first vessel (22).

11. A vessel (22) comprising a first sensor (24) operable to sense the first type of external environmental disturbance, at least one second sensor (26) operable to sense the environment of the vessel (22) comprising a radar, a lidar and/or a camera and the prediction handling device (10) according to claim 10.

12. The vessel according to claim 11, further comprising a vessel control device (28) operative to provide the vessel control function (30), which vessel control function (30) is configured to receive and use the predicted external environmental disturbance (PD₁ -PD₁₀) of the first type in the control of the first vessel (22).

## Patentansprüche

1. Verfahren zum Vorhersagen äußerer Umgebungsstörungen auf einem ersten Schiff (22), das in einem Gewässer fährt, wobei das erste Schiff einen ersten Sensor (24), der betreibbar ist, um eine erste Art äußerer Umgebungsstörung zu erfassen, und mindestens einen zweiten Sensor (26), der ein Radar, Lidar und/oder eine Kamera umfasst und betreibbar ist, um die Umgebung des Schiffes (22) zu erfassen, umfasst, wobei das Verfahren durch eine Vorhersagehandhabungsvorrichtung (10) durchgeführt wird und Folgendes umfasst:
Erhalten (S100; S200) mindestens einer aktuellen Sensormessung der Umgebung des ersten Schiffes (22) an einer aktuellen Schiffsposition (P_{P}) von dem zweiten Sensor (26),
Erhalten (S110; S220) mindestens einer aktuellen Störungsmessung (DM_{P}) der ersten Art von äußerer Umgebungsstörung auf dem ersten Schiff (22) an der aktuellen Schiffsposition (P_{P}) von dem ersten Sensor (24), wobei die erste Art von äußerer Umgebungsstörung Wind ist,
Erhalten (S120; S230) einer Vorhersage der äußeren Umgebungsstörung (PD₁ - PD₁₀) der ersten Art auf dem ersten Schiff (22) an einer oder mehreren geschätzten zukünftigen Positionen des ersten Schiffes (22), **dadurch gekennzeichnet, dass** die Vorhersage durch einen Prädiktor unter Verwendung der aktuellen Störungsmessung der ersten Art und der aktuellen Sensormessung in einem Schiffsumgebungsmodell durchgeführt wurde, das auf vorherigen Sensormessungen der Umgebung und vorherigen Störungsmessungen der ersten Art basiert, wobei die Umgebung des ersten Schiffes (22) in und/oder um das Gewässer herum Hindernisse umfasst, die die erste Art von äußerer Umgebungsstörung beeinflussen, wobei die Hindernisse in dem Schiffsumgebungsmodell berücksichtigt werden, und
Bereitstellen (S240) der vorhergesagten äußeren Umgebungsstörung zu einer Schiffssteuerfunktion (30), die zum Steuern des ersten Schiffes (22) verwendet wird.

2. Verfahren nach Anspruch 1, wobei das Schiffsumgebungsmodell basierend auf einer Karte des Gewässers und eventuell der das Gewässer umgebenden Umgebung ausgestaltet wurde, wobei die aktuelle Schiffsposition und ein Kurs des Schiffes auf eine Position in der Karte abgebildet werden.

3. Verfahren nach einem der vorhergehenden Ansprüche, wobei die vorherigen Sensormessungen der Umgebung und die vorherigen Störungsmessungen der ersten Art Messungen sind, die in demselben und/oder einem anderen Gewässer durchgeführt werden.

4. Verfahren nach einem der vorhergehenden Ansprüche, wobei die vorherigen Sensormessungen der Umgebung und vorherige Störungsmessungen der ersten Art mit vorherigen Schiffspositionen des ersten und/oder anderer Schiffe verknüpft sind.

5. Verfahren nach Anspruch 4, wobei das Schiffsumgebungsmodell basierend auf einem Analysieren vorheriger Sensormessungen der Umgebung und Identifizieren mindestens eines Objekts und einer Position des Objekts in Relation zu einer vorherigen Schiffsposition in dem Schiffsumgebungsmodell ausgestaltet wurde und wobei die Vorhersage darauf basiert, ob ein ähnliches Objekt in der aktuellen Sensormessung der Umgebung und an der Position des ähnlichen Objekts in Relation zu der aktuellen Schiffsposition zu finden ist.

6. Verfahren nach Anspruch 4 oder 5, wobei die vorherigen Schiffspositionen, die vorherigen Sensormessungen der Umgebung und die vorherigen Störungsmessungen der ersten Art verwendet wurden, um den Prädiktor derart zu trainieren, dass sich die erste Art von Störung in dem Schiffsumgebungsmodell ändert, während sich ein Schiff durch ein Gewässer bewegt.

7. Verfahren nach einem der Ansprüche 4-6, wobei die vorherigen Schiffspositionen vorherige Positionen des ersten Schiffes (22) und/oder vorherige Positionen eines oder mehrerer anderer Schiffe in demselben und/oder einem anderen Gewässer umfassen.

8. Verfahren nach einem der Ansprüche 4-7, wobei die aktuelle Schiffsposition des ersten Schiffes zusammen mit vorherigen Schiffspositionen des ersten Schiffes erhalten (S210) wird, indem sie von einem Positionssensor oder einer Schiffssteuerfunktion (30) empfangen wird, die zum Steuern des ersten Schiffes (22) verwendet wird, und die Schätzung einer oder mehrerer zukünftiger Positionen auf einer Analyse der aktuellen Schiffsposition des ersten Schiffes eventuell zusammen mit vorherigen Schiffspositionen basiert.

9. Verfahren nach einem der Ansprüche 1-7, ferner umfassend Analysieren der aktuellen Sensormessung, Bestimmen der aktuellen Schiffsposition basierend auf der Analyse der aktuellen Sensormessung der Umgebung und Schätzen der einen oder der mehreren zukünftigen Positionen basierend auf der Analyse der aktuellen Sensormessung der Umgebung und von eventuellen vorherigen Sensormessungen der Umgebung, die durch das erste Schiff durchgeführt werden.

10. Vorhersagehandhabungsvorrichtung (10) zum Handhaben von Vorhersagen äußerer Umgebungsstörungen auf einem ersten Schiff (22), das in einem Gewässer fährt, wobei das erste Schiff einen ersten Sensor (24), der betreibbar ist, um eine erste Art äußerer Umgebungsstörung zu erfassen, und mindestens einen zweiten Sensor (26), der ein Radar, ein Lidar und/oder eine Kamera umfasst und betreibbar ist, um die Umgebung des Schiffes (22) zu erfassen, umfasst, wobei die Vorhersagehandhabungsvorrichtung (10) Folgendes umfasst einen Prozessor (12), der zu Folgendem betreibbar ist:
Erhalten mindestens einer aktuellen Sensormessung der Umgebung des ersten Schiffes (22) an einer aktuellen Schiffsposition (P_{P}) von dem zweiten Sensor (26),
Erhalten mindestens einer aktuellen Störungsmessung (DM_{P}) der ersten Art von äußerer Umgebungsstörung auf dem ersten Schiff (22) an der aktuellen Schiffsposition (P_{P}) von dem ersten Sensor (24), wobei die erste Art von äußerer Umgebungsstörung Wind ist,
Erhalten einer Vorhersage der äußeren Umgebungsstörung der ersten Art (PD₁ - PD₁₀) auf dem ersten Schiff (22) an einer oder mehreren geschätzten zukünftigen Positionen des ersten Schiffes (22), **dadurch gekennzeichnet, dass**
die Vorhersage durch einen Prädiktor unter Verwendung der aktuellen Störungsmessung der ersten Art und der aktuellen Sensormessung in einem Schiffsumgebungsmodell durchgeführt wurde, das auf vorherigen Sensormessungen der Umgebung und vorherigen Störungsmessungen der ersten Art basiert, wobei die Umgebung des ersten Schiffes (22) in und/oder um das Gewässer herum Hindernisse umfasst,
die die erste Art von äußerer Umgebungsstörung beeinflussen, wobei die Hindernisse in dem Schiffsumgebungsmodell berücksichtigt werden, und Bereitstellen der vorhergesagten äußeren Umgebungsstörung zu einer Schiffssteuerfunktion (30), die zum Steuern des ersten Schiffes (22) verwendet wird.

11. Schiff (22), das einen ersten Sensor (24), der betreibbar ist, um die erste Art von äußerer Umgebungsstörung zu erfassen, mindestens einen zweiten Sensor (26), der betreibbar ist, um die Umgebung des Schiffes (22) zu erfassen, der ein Radar, ein Lidar und/oder eine Kamera umfasst, und die Vorhersagehandhabungsvorrichtung (10) nach Anspruch 10 umfasst.

12. Schiff nach Anspruch 11, das ferner eine Schiffssteuervorrichtung (28) umfasst, die betreibbar ist, um die Schiffssteuerfunktion (30) bereitzustellen, wobei die Schiffssteuerfunktion (30) dazu ausgelegt ist, die vorhergesagte äußere Umgebungsstörung (PD₁ - PD₁₀) des ersten Typs zu empfangen und bei der Steuerung des ersten Schiffes (22) zu verwenden.

## Revendications

1. Procédé de prédiction de perturbations environnementales externes sur un premier navire (22) se déplaçant sur un plan d'eau, le premier navire comprenant un premier capteur (24) pouvant détecter un premier type de perturbation environnementale externe et au moins un deuxième capteur (26) comprenant un radar, un lidar et/ou une caméra et pouvant détecter l'environnement du navire (22), le procédé étant mis en œuvre par un dispositif de manipulation de prédiction (10) et comprenant les étapes suivantes :
obtenir (S100 ; S200) au moins une mesure de capteur courante de l'environnement du premier navire (22) à une position courante du navire (P_{P}) à partir du deuxième capteur (26),
obtenir (S110 ; S220) au moins une mesure de perturbation courante (DM_{P}) du premier type de perturbation environnementale externe sur le premier navire (22) à la position courante du navire (P_{P}) à partir du premier capteur (24), le premier type de perturbation environnementale externe étant le vent,
obtenir (S120 ; S230) une prédiction de la perturbation environnementale externe (PD₁ - PD₁₀) du premier type sur le premier navire (22) à une ou plusieurs positions futures estimées du premier navire (22), **caractérisé en ce que** ladite prédiction a été effectuée par un prédicteur utilisant la mesure courante de perturbation du premier type et la mesure de capteur courante dans un modèle environnemental de navire qui est basé sur des mesures de capteur antérieures de l'environnement et des mesures de perturbation antérieures du premier type, où l'environnement du premier navire (22) dans et/ou autour du plan d'eau comprend des obstacles affectant le premier type de perturbation environnementale externe, lesquels obstacles sont pris en compte dans le modèle environnemental du navire, et
fournir (S240) la perturbation environnementale externe prédite à une fonction de commande de navire (30) utilisée pour commander le premier navire (22).

2. Procédé selon la revendication 1, dans lequel le modèle environnemental du navire a été formé sur la base d'une carte dudit plan d'eau et éventuellement de l'environnement entourant ledit plan d'eau, la position courante du navire et le cap du navire étant mis en correspondance avec une position sur la carte.

3. Procédé selon l'une quelconque des revendications précédentes, dans lequel les mesures de capteur antérieures de l'environnement et les mesures de perturbation antérieures du premier type sont des mesures effectuées dans le même plan d'eau et/ou dans un autre plan d'eau.

4. Procédé selon l'une quelconque des revendications précédentes, dans lequel les mesures de capteur antérieures de l'environnement et les mesures de perturbation antérieures du premier type sont liées à des positions de navire précédentes du premier navire et/ou d'autres navires.

5. Procédé selon la revendication 4, dans lequel le modèle environnemental de navire a été formé sur la base de l'analyse de mesures de capteur antérieures de l'environnement et de l'identification d'au moins un objet et d'une position de l'objet par rapport à une position de navire antérieur dans le modèle environnemental de navire, et dans lequel la prédiction est basée sur le fait qu'un objet similaire puisse ou non être trouvé dans la mesure de capteur courante de l'environnement et sur la position de l'objet similaire par rapport à la position courante du navire.

6. Procédé selon les revendications 4 ou 5, dans lequel les positions de navire antérieures, les mesures de capteur antérieures de l'environnement et les mesures de perturbation antérieures du premier type ont été utilisées pour entraîner le prédicteur quant à la manière avec laquelle le premier type de perturbation change dans le modèle environnemental de navire lorsqu'un navire se déplace sur un plan d'eau.

7. Procédé selon l'une quelconque des revendications 4 à 6, dans lequel les positions de navire antérieures comprennent des positions antérieures du premier navire (22) et/ou des positions antérieures d'un ou plusieurs autres navires sur le même plan d'eau et/ou un autre plan d'eau.

8. Procédé selon l'une quelconque des revendications 4 à 7, dans lequel la position de navire courante du premier navire est obtenue (S210) conjointement avec les positions de navire antérieures du premier navire en étant reçue d'un capteur de position ou d'une fonction de commande de navire (30) utilisée pour commander le premier navire (22) et l'estimation d'une ou plusieurs positions futures est basée sur une analyse de la position de navire courante du premier navire éventuellement conjointement avec des positions de navire antérieures.

9. Procédé selon l'une quelconque des revendications 1 à 7, comprenant en outre d'analyser la mesure de capteur courante, de déterminer la position de navire courante sur la base de l'analyse de la mesure de capteur courante de l'environnement et d'estimer les une ou plusieurs positions futures sur la base de l'analyse de la mesure de capteur courante de l'environnement et des mesures possibles antérieures de capteur de l'environnement effectuées par le premier navire.

10. Dispositif de gestion de prédictions (10) permettant de gérer des prédictions de perturbations environnementales externes sur un premier navire (22) se déplaçant sur un plan d'eau, le premier navire comprenant un premier capteur (24) pouvant détecter un premier type de perturbation environnementale externe et au moins un deuxième capteur (26) comprenant un radar, un lidar et/ou une caméra et pouvant détecter l'environnement du navire (22), le dispositif de gestion de prédictions (10) comprenant :
un processeur (12) pouvant fonctionner pour :
obtenir au moins une mesure de capteur courante de l'environnement du premier navire (22) à une position courante du navire (P_{P}) à partir du deuxième capteur (26), obtenir au moins une mesure de perturbation courante (DM_{P}) du premier type de perturbation environnementale externe sur le premier navire (22) à la position courante du navire (P_{P}) à partir du premier capteur (24), le premier type de perturbation environnementale externe étant le vent,
obtenir une prédiction de la perturbation environnementale externe du premier type (PD₁ - PD₁₀) sur le premier navire (22) à une ou plusieurs positions futures estimées du premier navire (22), **caractérisé en ce que**
ladite prédiction ayant été effectuée par un prédicteur utilisant la mesure de perturbation courante du premier type et la mesure de capteur courante dans un modèle environnemental de navire qui est basé sur des mesures de capteur antérieures de l'environnement et des mesures de perturbation antérieures du premier type, l'environnement du premier navire (22) sur et/ou autour du plan d'eau comprenant des obstacles affectant le premier type de perturbation externe de l'environnement, lesquels obstacles sont considérés dans le modèle environnemental de navire, et la perturbation environnementale externe prédite étant fournie à une fonction de commande de navire (30) utilisée pour commander le premier navire (22).

11. Navire (22) comprenant un premier capteur (24) pouvant fonctionner pour détecter le premier type de perturbation environnementale externe, au moins un deuxième capteur (26) pouvant fonctionner pour détecter l'environnement du navire (22) comprenant un radar, un lidar et/ou une caméra et le dispositif de gestion de prédictions (10) selon la revendication 10.

12. Navire selon la revendication 11, comprenant en outre un dispositif de commande de navire (28) fonctionnant pour fournir la fonction de commande de navire (30), laquelle fonction de commande de navire (30) est configurée pour recevoir et utiliser la perturbation environnementale externe prédite (PD₁ -PD₁₀) du premier type dans la commande du premier navire (22).
